# EUROPÄISCHE PATENTSCHRIFT

(11) **EP 0 449 044 B1**
(45) Veröffentlichungstag und Bekanntmachung des Hinweises auf die Patenterteilung: **21.07.1993**
(21) Anmeldenummer: 91103908.9
(22) Anmeldetag: 14.03.1991
(51) Int. Cl.: B62D 65/00, B60J 10/08

(54) **Vorrichtung zum Aufdrücken einer Dichtung**
Device for attaching a weather strip
Dispositif pour attacher un joint d'étanchéité

(30) Priorität: 30.03.1990 DE 4010185
(43) Veröffentlichungstag der Anmeldung: 02.10.1991
(73) Patentinhaber: Adam Opel Aktiengesellschaft, 65428 Rüsselsheim (DE)
(72) Erfinder: Rückerl, Wolfgang, W-6093 Flörsheim (DE); Anstatt, Hans, W-6500 Mainz 42 (DE)
(74) Vertreter: Bergerin, Ralf, Dipl.-Ing.

(56) Entgegenhaltungen:
- EP-A- 0 253 599
- DE-A- 3 500 493
- DE-A- 3 541 865
- GB-A- 2 215 762

## Beschreibung

Die Erfindung bezieht sich auf eine Vorrichtung zum Aufdrücken einer Dichtung eines Türöffnungsrahmens, insbesondere auf einen Halteflansch.

Die Montage der Dichtung im Türöffungsrahmen eines Kraftfahrzeugs ist relativ arbeitsaufwendig. Die DE-OS 35 41 865 zeigt, wie eine solche Montage automatisch mittels eines Handhabungsautomaten erfolgen kann, der entlang des Halteflansches fährt und dabei die Dichtung mittels Andrückrollen auf den Halteflansch schiebt. Die EP 0 253 599 zeigt, daß das Aufdrücken der Dichtung auch mit einem Roboter erfolgen kann, an dessen Arm eine entlang des Halteflansches geführte Andrückrolle vorgesehen ist.

Die bekannten Vorrichtungen sind sehr aufwendig gestaltet und benötigen für das Aufdrücken einer Dichtung eine relativ lange Zeitdauer. Weiterhin besteht bei ihnen die Gefahr, daß die Dichtung nicht überall mit gleicher Kraft und damit überall gleich weit aufgeschoben wird.

Der Erfindung liegt die Aufgabe zugrunde, eine Vorrichtung der eingangs genannten Art so auszubilden, daß mit ihr eine Dichtung möglichst rasch und gleichmäßig in einen Türöffnungsrahmen montiert werden kann.

Diese Aufgabe wird erfindungsgemäß gelöst durch eine in den Türöffnungsrahmen einsetzbare, der Kontur des Türöffnungsrahmens angepaßte felge mit einem mittels eines Druckmittels zu füllenden und dadurch radial zur Felge sich erweiternden Reifenprofil.

Mit einer solchen Vorrichtung läßt sich eine Dichtung im Türöffnungsrahmen sehr rasch montieren, da sie in allen Bereichen gleichzeitig und mit gleicher Kraft zum Türöffnungsrahmen hin gedrückt wird. Dadurch haftet die Dichtung zuverlässiger im Türöffnungsrahmen. Durch die gleichmäßige Andrückkraft wird zudem erreicht, daß sich das Gerüstband der Dichtung beim Aufdrücken nicht deformiert.

Das Reifenprofil ist besonders kostengünstig und führt zu einer starken Maßänderung zwischen dem druckbeaufschlagten und drucklosen Zustand, wenn es ein autoreifenartiger Luftreifen mit sich stark dehnenden Seitenteilen ist.

Die Handhabung der Vorrichtung ist sehr einfach, wenn gemäß einer vorteilhaften Ausgestaltung der Erfindung die Vorrichtung ein von Hand zu betätigendes, die Luftzufuhr in das Reifenprofil steuerndes Steuerventil aufweist.

Die Erfindung läßt zahlreiche Ausführungsformen zu. Zur weiteren Verdeutlichung ihres Grundgedankens ist eine davon in der Zeichnung dargestellt und wird nachfolgend beschrieben. Dies zeigt in
- Fig. 1: einen Teilbereich einer Fahrzeugkarosserie mit der in einen Türöffnungsrahmen eingesetzten Vorrichtung,
- Fig. 2: einen senkrechten Schnitt durch die Vorrichtung entlang der Linie II - II im druckbeaufschlagten Zustand,
- Fig. 3: einen senkrechten Schnitt durch die Vorrichtung entlang der Linie II - II im nicht druckbeaufschlagten Zustand.

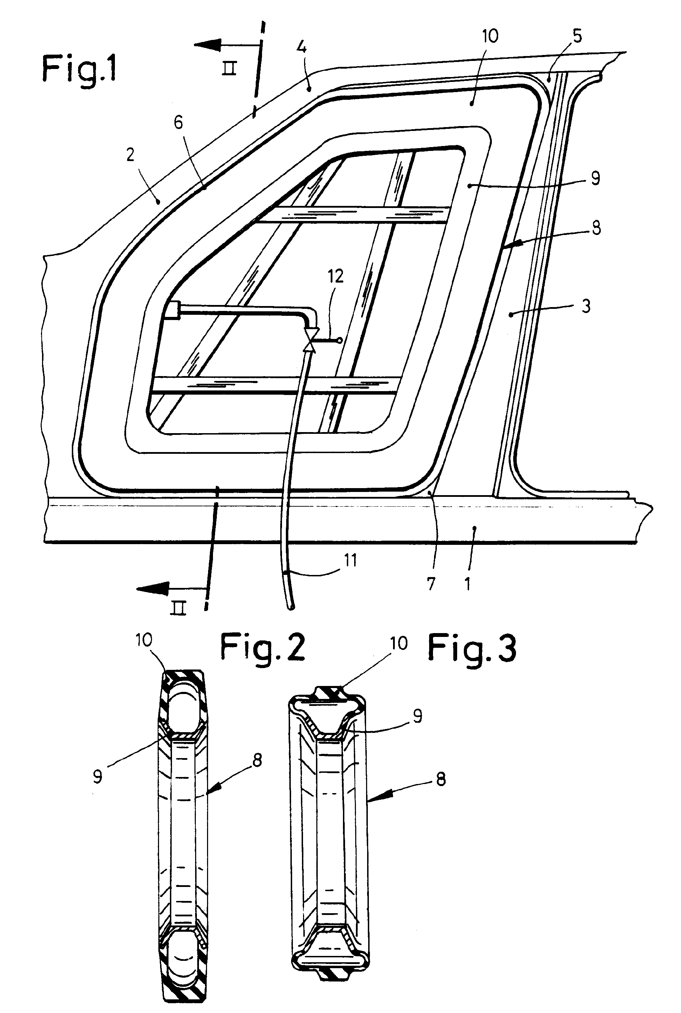

Die Figur 1 zeigt von einer Fahrzeugkarosserie im wesentlichen einen Türschweller 1, eine A-Säule 2 und einen Dachrahmen 4. Diese Bauteile bilden zusammen einen Türöffnungsrahmen 5, in welchem eine umlaufende Dichtung 6 zur Abdichtung der nicht gezeigten Türe vorgesehen ist.

Zum Aufschieben der Dichtung 6 auf einen umlaufenden Halteflansch 7 dient eine erfindungsgemäße Vorrichtung 8. Diese hat eine der Kontur des Türöffnungsrahmens 5 angepaßte, jedoch erheblich kleinere Felge 9 mit einem als Luftreifen ausgebildeten, aufgummierten Reifenprofil 10. Dieses Reifenprofil 10 dient dazu, die Dichtung 6 auf den Halteflansch 7 zu drücken. Hierzu ist an der Felge 9 eine Druckluftleitung 11 angeschlossen, in welche ein von Hand zu betätigendes Steuerventil 12 geschaltet ist.

Die Figur 2 zeigt im Schnitt die Felge 9 mit dem Reifenprofil 10 im druckbeaufschlagten Zustand. Die Figur 3 läßt erkennen, daß die Seitenwände des Reifenprofils 10 elastisch sind. Dadurch beulen sie sich bei abgelassenem Druck nach außen, wodurch sich die Außenabmessung der Vorrichtung 8 stark verkleinert. In diesem nicht druckbeaufschlagten Zustand kann man die Vorrichtung 8 bequem in den Türöffnungsrahmen 5 einsetzen. Dann betätigt man das Steuerventil 12, so daß sich das Reifenprofil 10 aufbläst und die zuvor in Schlaufen aufgesteckte Dichtung 6 auf den Halteflansch 7 des Türöffnungsrahmens 5 schiebt.

## Patentansprüche

1. Vorrichtung zum Aufdrücken einer Dichtung eines Türöffnungsrahmens, insbesondere auf einen Halteflansch, gekennzeichnet durch eine in den Türöffnungsrahmen (5) einsetzbare, der Kontur des Türöffnungsrahmens (5) angepaßte Felge (9) mit einem mittels eines Druckmittels zu füllenden und dadurch radial zur Felge (9) sich erweiternden Reifenprofil (10).

2. Vorrichtung nach Anspruch 1, dadurch gekennzeichnet, daß das Reifenprofil (10) ein autoreifenartiger Luftreifen mit sich stark dehnenden Seitenteilen ist.

3. Vorrichtung nach den Ansprüchen 1 oder 2, dadurch gekennzeichnet, daß sie ein von Hand zu betätigendes, die Luftzufuhr in das Reifenprofil (10) steuerndes Steuerventil (12) aufweist.

## Claims

1. Device for press-fitting a seal of a door opening frame, in particular onto a holding flange, **characterised** by a rim (9), adapted to the contour of the door opening frame (5), to be inserted into the door opening frame (5), with a tyre profile (10) to be filled with a pressure medium causing a radial expansion towards the rim (9).

2. Device according to claim 1, **characterised** in that the tyre profile (10) is an automobile type of pneumatic tyre with highly stretchable side parts.

3. Device according to claims 1 and 2, **characterised** in that it has a manually operated control valve (12) which controls the air supply to the tyre profile (10).

## Revendications

1. Dispositif pour monter, notamment sur un bord de fixation; un joint d'étanchéité d'un cadre d'ouverture de porte, caractérisé, par un châssis en forme de jante (9) qui peut être inséré dans le cadre (5) d'ouverture de porte au contour duquel il est adapté et porte un bandage creux (10) capable d'être rempli d'un fluide sous pression et de s'élargir ainsi radialement par rapport au châssis (9).

2. Dispositif selon revendication 1, caractérisé par le fait que le bandage creux (10) est un bandage pneumatique semblable à ceux pour véhicules automobiles, doté de parties latérales à fort pouvoir d'allongement.

3. Dispositif selon la revendication 1 ou 2, caractérisé par le fait qu'il présente une vanne de commande (12) actionnable manuellement, commandant l'amenée d'air dans le bandage creux (10).
